# EUROPÄISCHE PATENTANMELDUNG

(11) **EP 3 479 951 A1**
(43) Veröffentlichungstag der Anmeldung: **08.05.2019**
(21) Anmeldenummer: 18204955.1
(22) Anmeldetag: 07.11.2018
(51) Int. Cl.: B23K 37/04, B23K 26/00, B23K 26/08, B23K 26/30, B23K 26/38, B23K 26/03, B23K 101/06

(54) **MATERIALBEARBEITUNGSMASCHINE SOWIE VERFAHREN ZUR HERSTELLUNG EINES BEHÄLTERS IN EINER MATERIALBEARBEITUNGSMASCHINE**

(30) Priorität: 07.11.2017 DE 102017125942
(71) Anmelder: Weil Engineering GmbH, 79379 Müllheim (DE)
(72) Erfinder: WELL, Wolfgang, 79379 Müllheim (DE); SCHAPPACHER, Werner, 79379 Müllheim (DE)
(74) Vertreter: Mertzlufft-Paufler, Cornelius

(57) **Zusammenfassung**

Diese Anmeldung betrifft eine Materialbearbeitungsmaschine (1), die zum Laserstrahlschneiden und/oder Laserstrahlschweißen eines, in einer Aufspanneinrichtung der Materialbearbeitungsmaschine (1) gehaltenen Werkstücks wenigstens eine Laserstrahleinrichtung (5, 6) hat, dadurch gekennzeichnet, dass die Materialbearbeitungsmaschine (1) wenigstens eine Laserstrahlschneideinrichtung (5) und mindestens eine Laserstrahlschweißeinrichtung (6) hat, dass der wenigstens einen Laserstrahlschneideinrichtung (5) und der mindestens einen Laserstrahlschweißeinrichtung (6) wenigstens eine gemeinsame Aufspanneinrichtung zugeordnet ist, und dass die Relativposition der wenigstens einen Aufspanneinrichtung mitsamt dem daran gehaltenen Werkstück in Relation zur wenigstens einen Laserstrahlschneideinrichtung (5) und zur mindestens einen Laserstrahlschweißeinrichtung (6) in der Materialbearbeitungsmaschine (1) veränderbar ist. Ein Verfahren zur Herstellung eines Formkörpers.

## Beschreibung

Die Erfindung betrifft eine Materialbearbeitungsmaschine, die zum Laserstrahlschneiden und/oder Laserstrahlschweißen eines in einer Aufspanneinrichtung der Materialbearbeitungsmaschine gehaltenen Werkstücks wenigstens eine Laserstrahleinrichtung hat.

Die Erfindung befasst sich auch mit einem Verfahren zur Herstellung eines Formkörpers mit wenigstens einem, in das Formkkörperinnere führenden Formkörperstutzen in einer Materialbearbeitungsmaschine, insbesondere der eingangs erwähnten Art.

In einem Kraftfahrzeug werden verschiedene Behälter benötigt, die als Druckluft- oder Flüssigkeitsbehälter bestimmt sind. Damit diese Behälter die entsprechenden Fluide sicher aufnehmen und speichern können, sind diese Behälter meist aus einem metallenen Wandungsmaterial und insbesondere aus Metallblech hergestellt. Die Behälter weisen mindestens einen in das Behälterinnere führenden Behälterstutzen auf, der an dem eine Stutzenöffnung umgrenzenden Randbereich des Wandungsmaterials umlaufend dicht anzuschweißen ist. Um die Stutzenöffnung in das für den Behälter bestimmte Wandungsmaterial einzubringen, wird eine entsprechende Stutzenöffnung in das Wandungsmaterial ausgestanzt, bevor der meist als Drehteil hergestellte Behälterstutzen angesetzt und am Randbereich des Wandungsmaterials festgeschweißt wird. Die verschiedenen und völlig unterschiedlich auszuführenden Arbeitsschritte zur Herstellung eines Behälters oder auch anderer dreidimensionaler Formkörper sind jedoch vergleichsweise aufwändig. Dabei wird der Aufwand noch dadurch erhöht, dass das zum Stanzen gehaltene Werkstück entnommen und anschließend unterhalb einer Schweißeinrichtung aufgespannt werden muss, um dort den genau zu positionierenden Behälterstutzen festzuschweißen.

Es besteht daher insbesondere die Aufgabe, eine Materialbearbeitungsmaschine der eingangs erwähnten Art sowie ein Verfahren zur Herstellung eines Behälters oder auch eines anderen Formkörpers in einer solchen Materialbearbeitungsmaschine zu schaffen, welche die Bearbeitung eines derartigen Werkstücks in mehreren Herstellungsschritten wesentlich erleichtern, vereinfachen und präziser gestalten.

Die erfindungsgemäße Lösung dieser Aufgabe besteht bei der Materialbearbeitungsmaschine der eingangs erwähnten Art insbesondere darin, dass die Materialbearbeitungsmaschine wenigstens eine Laserstrahlschneideinrichtung und mindestens eine Laserstrahlschweißeinrichtung hat, dass der wenigstens einen Laserstrahlschneideinrichtung und der mindestens einen Laserstrahlschweißeinrichtung eine gemeinsame Aufspanneinrichtung zugeordnet ist, und dass die Relativposition der Aufspanneinrichtung mitsamt dem daran gehaltenen Werkstück in Relation zur wenigstens einen Laserstrahlschneideinrichtung und zur mindestens einen Laserstrahlschweißeinrichtung in der Materialbearbeitungsmaschine veränderbar ist.

Die erfindungsgemäße Materialbearbeitungsmaschine hat wenigstens eine Laserstrahlschneideinrichtung zum Laserstrahlschneiden und mindestens eine Laserstrahlschweißeinrichtung zum Laserstrahlschweißen an einem Werkstück, welches Werkstück in einer Aufspanneinrichtung gehalten ist. Dabei kann durch Laserstrahlschneiden beispielsweise eine Stutzenöffnung in das für einen Formkörper benötigte Wandungsmaterial eingearbeitet werden und ein Ausstanzen dieser Stutzenöffnung ist nicht mehr nötig. Durch nachfolgendes Laserstrahlschweißen ist es möglich, an dem die Stutzenöffnung umgrenzenden Randbereich einen Formkörperstutzen anzuschweißen. Ein weiteres Anwendungsbeispiel sieht die Begradigung eines als Teilbereich der Formkörperwandung dreidimensional geformten Werkstücks durch Laserstrahlschneiden vor, bevor dieses Werkstück anschließend mit einem weiteren formangepassten Werkstück zu dem benötigten Formkörper komplettiert und entlang den begradigten Kanten dieser Werkstücke durch Laserstrahlschweißen verschweißt werden. Der wenigstens einen Laserstrahlschneideinrichtung und der mindestens einen Laserstrahlschweißeinrichtung ist eine gemeinsame Aufspanneinrichtung angeordnet, an der ein Werkstück während der Bearbeitung durch Laserstrahlschneiden beziehungsweise Laserstrahlschweißen gehalten wird. Die Relativposition dieser Aufspanneinrichtung ist mitsamt dem daran gehaltenen Werkstück in Relation zur wenigstens einen Laserstrahlschneideinrichtung und zur mindestens eine Laserstrahlschweißeinrichtung in der Materialbearbeitungsmaschine veränderbar. Auf diese Weise kann das an der Aufspanneinrichtung gehaltene Werkstück wahlweise in eine Bearbeitungsposition unterhalb der Laserstrahlschneideinrichtung oder unterhalb der Laserstrahlschweißeinrichtung positioniert werden.

Um die zum Anschweißen einer Gewindemuffe, eines Stutzens oder dergleichen Bestandteils erforderliche Öffnung in ein gerundetes oder dergleichen unplanes Blech gleichmäßig einarbeiten zu können, sieht eine bevorzugte Weiterbildung gemäß der Erfindung vor, dass die Laserstrahlschneideinrichtung in gleichbleibendem Abstand zu einer, bereichsweise aus einer Aufspannebene vorstehenden und/oder unter einer Aufspannebene angeordneten Werkstück-Oberfläche verfahrbar ist. Um eine Gewindemuffe, einen Stutzen oder dergleichen Bestandteil aus der Blechöffnung eines Bleches vorstehen zu lassen, das gegenüber einer Aufspanneinrichtung schräg angeordnet ist oder eine gerundete Oberfläche hat, ist in das Blech eine von einer Kreisform abweichende Öffnung einzuarbeiten, insbesondere wenn der angeschweißte Stutzen oder dergleichen später im rechten Winkel über die Aufspannebene vorstehen soll. Würde die Laserstrahlschneideinrichtung während des Schneidvorganges in einer zur Aufspannebene parallelen Ebene verfahren, wäre die Laserstrahlschneideinrichtung dabei in unterschiedlichen Abständen zur Blechoberfläche angeordnet und die Qualität des Schneidvorganges könnte dadurch beeinträchtigt werden. Es ist daher besonders vorteilhaft, wenn die Laserstrahlschneideinrichtung während des Schneidvorganges in einem gleichbleibenden Abstand zur Werkstück-Oberfläche verfahren werden kann.

Dabei wird eine Ausführung bevorzugt, bei der zur Einhaltung eines gleichbleibenden Abstandes zwischen der Laserstrahleinrichtung und der Werkstück-Oberfläche des in der Aufspanneinrichtung gehaltenen Werkstückes eine Höhenkompensation vorgesehen ist, und wenn zur Höhenkompensation vorzugsweise eine kapazitive Abstandsmessung des Abstands zwischen der Laserstrahlschneideinrichtung und der Werkstück-Oberfläche vorgesehen ist. Dabei kann die Abstandsmessung über zumindest einen kapazitiven Abstandssensor erfolgen.

Durch die Höhenkompensation, die vorzugsweise als kapazitive Abstandsmessung ausgebildet ist, wird die Laserstrahlschneideinrichtung stets in gleicher Höhe des in einer Schrägstellung eingespannten und/oder unplanen Blechs verfahren. Eine solche Höhenkompensation lässt sich jedoch bei der Laserstrahlschweißeinrichtung aus verschiedenen Gründen nicht in gleicher Weise umsetzen. Zum einen ist die Schweißoptik in größerem Abstand vom Blech vorgesehen, so dass beispielsweise eine kapazitive Abstandsmessung zur Höhenkompensation nicht ohne weiteres möglich ist. Zum anderen ist die Schneidgeschwindigkeit der Laserstrahlschneideinrichtung im Vergleich zur Schweißgeschwindigkeit der Laserstrahlschweißeinrichtung wesentlich schneller. Eine Weiterbildung gemäß der Erfindung von eigener schutzwürdiger Bedeutung sieht daher vor, dass während des Schneidvorganges fortlaufend die Koordinaten der Laserstrahlschneideinrichtung erfasst und in einer Steuereinheit der Materialbearbeitungsmaschine gespeichert werden, und dass die während des Schneidvorgangs gespeicherten Koordinaten zum Festlegen des Soll- und Verfahrweges der Laserstrahlschweißeinrichtung während des Schweißvorganges dienen. Auf diese Weise lässt sich der Schweißvorgang der Laserstrahlschweißeinrichtung in einer Genauigkeit und einer Qualität durchführen, die mit dem Schneidvorgang der Laserstrahlschneideinrichtung vergleichbar ist.

Zu den während des Schneidvorganges ermittelten X- und Y-Koordinaten der Laserstrahlschneideinrichtung werden auch die entsprechenden Z-Koordinaten ausgelesen. Dabei sieht eine bevorzugte Ausführung gemäß der Erfindung vor, dass die während des Schneidvorganges gespeicherten Koordinaten in Polarkoordinaten umgerechnet werden, anhand denen anschließend der Soll- und Verfahrweg der Laserstrahlschweißeinrichtung festlegbar ist. Somit werden die X-, Y- und Z-Koordinaten der Laserstrahlschneideinrichtung während ihres Schneidvorganges anschließend in Polarkoordinaten umgesetzt, mit denen sodann die Laserstrahlschweißeinrichtung verfahren werden kann. Auf diese Weise kann mit großer Genauigkeit festgelegt werden, wo die Laserstrahlschweißeinrichtung den Schweißvorgang beginnen und wo sie den Schweißvorgang beenden soll.

Eine besonders einfache Ausgestaltung gemäß der Erfindung sieht vor, dass die Aufspanneinrichtung als Vakuum- oder Magnetaufspanneinrichtung ausgebildet ist.

Zur Lösung der oben stehenden Aufgabe ist nach einem weiteren Vorschlag von eigener schutzwürdiger Bedeutung vorgesehen, dass die mindestens eine Laserstrahlschweißeinrichtung eine den Laserstrahl führende Laseroptik hat, die als eine um eine Drehachse verfahrbare Rotations- oder Drehoptik ausgebildet ist. Die Drehachse dieser verfahrbaren Dreh- oder Rotationsoptik kann beispielsweise koaxial zur Längsachse des Formkörperstutzens angeordnet werden, um anschließend die Rotations- oder Drehoptik um den Formkörperstutzen zu verfahren und um den Formkörperstutzen rundum an dem daran anliegenden und für den Formkörper benötigten Werkstück anzuschweißen. Somit kann auf ein kompliziertes Verfahren einer Laseroptik entlang den ansonsten üblichen X-, Y- und Z-Achsen verzichtet werden.

Ein weiterer Lösungsvorschlag zur Lösung der oben stehenden Aufgabe für den selbstständig Schutz beansprucht wird sieht vor, dass die Materialbearbeitungsmaschine zumindest drei Arbeitsstationen hat, von denen an jeweils zumindest zwei Arbeitsstationen aneinander nachfolgender Bearbeitungsvorgänge an ein und demselben Werkstück erfolgen. Die gemäß dieser Weiterbildung ausgeführte Materialbearbeitungsmaschine hat mehrere Arbeitsstationen, von denen an jeweils zumindest zwei Arbeitsstationen einander nachfolgende Bearbeitungsvorgänge an ein und demselben Werkstück erfolgen. Um diese Bearbeitungsvorgänge vorzunehmen, muss das Werkstück nicht umgespannt und nicht neu positioniert werden, vielmehr wird das Werkstück lediglich an die nachfolgende Bearbeitungsstation innerhalb der Materialbearbeitungsmaschine weitergeleitet. Da ein weiteres Werkstück bereits in einer Arbeitsstation neu aufgespannt werden kann, während in den anderen Arbeitsstationen bereits die Bearbeitung anderer Werkstücke erfolgt, können in der Materialbearbeitungsmaschine hohe Stückzahlen pro Zeiteinheit mit hoher Präzision bearbeitet werden.

Um beim Wechsel der Arbeitsstationen das zu bearbeitende Werkstück nicht neu aufspannen zu müssen, ist es vorteilhaft, wenn die Aufspanneinrichtung mitsamt dem Werkstück in der Materialbearbeitungsmaschine zwischen den Arbeitsstationen verfahrbar ist.

Eine bevorzugte Ausführungsform gemäß der Erfindung sieht vor, dass die Materialbearbeitungsmaschine eine erste Arbeitsstation mit einer Laserstrahlschweißeinrichtung hat und dass beidseits der ersten Arbeitsstation jeweils eine zweite Arbeitsstation mit einer Laserstrahlschweißeinrichtung vorgesehen ist.

Bei dem Verfahren der eingangs erwähnten Art besteht die erfindungsgemäße Lösung darin, dass in einen Teilbereich eines für den Formkörper bestimmten Wandungsmaterials eine Stutzenöffnung durch Laserstrahlschweißen eingearbeitet wird, dass in einem nachfolgenden Verfahrensschritt der Formkörperstutzen an dem die Stutzenöffnung umgrenzenden Randbereich des Wandungsmaterials durch Laserstrahlschweißen befestigt wird, und dass das Wandungsmaterial während des Laserstrahlschneidens und des nachfolgenden Laserstrahlschweißens in ein und derselben Aufspanneinrichtung gehalten ist.

Dabei sieht eine besonders vorteilhafte Vorgehensweise vor, dass die Laserstrahlschneideinrichtung in gleichbleibendem Abstand zu einer, bereichsweise aus einer Aufspannebene vorstehenden und/oder unter einer Aufspannebene angeordneten Werkstück-Oberfläche verfahren wird. Da bei dieser Vorgehensweise die Laserstrahlschneideinrichtung während des Schneidvorganges einen gleichbleibenden Abstand zur Werkstück-Oberfläche einhält, wird eine hohe Genauigkeit und Qualität des Schneidergebnisses begünstigt.

Um den Abstand zwischen der Laserstrahlschneideinrichtung einerseits und der Werkstück-Oberfläche andererseits stets einzuhalten, ist es vorteilhaft, wenn zur Einhaltung eines solchen gleichbleibenden Abstands zwischen der Laserstrahleinrichtung und der Werkstück-Oberfläche des in der Aufspanneinrichtung gehaltenen Werkstückes eine Höhenkompensation vorgesehen ist, und wenn zur Höhenkompensation vorzugsweise eine kapazitive Abstandsmessung des Abstands zwischen der Laserstrahlschneideinrichtung und der Werkstück-Oberfläche vorgesehen ist.

Um anschließend nach dem Schneidvorgang auch den nachfolgenden Schweißvorgang mit einer vergleichbaren Genauigkeit und Präzision durchführen zu können, ist auch bei dem erfindungsgemäßen Verfahren vorgesehen, dass während des Schneidvorgangs fortlaufend die Koordinaten der Laserstrahlschneideinrichtung erfasst und in einer Steuereinheit der Materialbearbeitungsmaschine gespeichert werden, und dass die während des Schneidvorgangs gespeicherten Koordinaten zum Festlegen des Soll- und Verfahrwegs der Laserstrahlschweißeinrichtung während des Schweißvorganges dienen.

Dabei wird ein Verfahren bevorzugt, bei dem die während des Schneidvorganges gespeicherten Koordinaten in Polarkoordinaten umgerechnet werden, anhand denen anschließend der Soll- und Verfahrweg der Laserstrahlschweißeinrichtung festgelegt wird.

Weiterbildungen gemäß der Erfindung ergeben sich aus der nachfolgenden Beschreibung in Verbindung mit den Ansprüchen sowie der Zeichnung. Nachstehend wird die Erfindung anhand eines bevorzugten Ausführungsbeispieles noch näher beschrieben.

Es zeigt:
- Fig. 1: eine Materialbearbeitungsmaschine, die drei Arbeitsstationen hat, in denen jeweils eine Laserstrahleinrichtung entlang einer Z-Achse verfahrbar ist, wobei den Arbeitsstationen gemeinsame Aufspanneinrichtungen zugeordnet sind, die unterhalb den Arbeitsstationen positioniert werden können,
- Fig. 2: die Materialbearbeitungsmaschine aus Figur 1 in einer Vorderansicht,
- Fig. 3: die Materialbearbeitungsmaschine aus Figur 1 und 2 in einer Seitenansicht,
- Fig. 4 bis 9: einzelne Verfahrensschritte, welche die Bearbeitung eines zur Herstellung eines Behälters oder eines anderen, insbesondere dreidimensionalen Formkörpers bestimmten Wandungsabschnitts zeigen, an dem eine Stutzenöffnung eingearbeitet und ein Formkörperstutzen angeschweißt wird, wobei

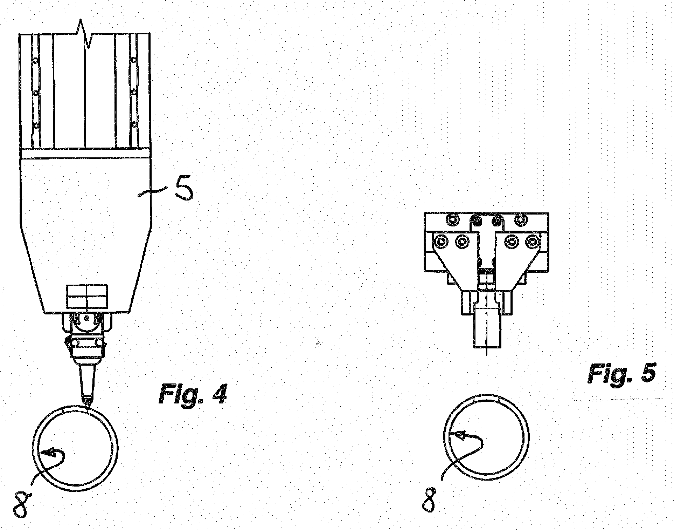

- Fig. 4: die Herstellung der Stutzenöffnung in dem Wandungsabschnitt mittels einer Laserstrahlschneideinrichtung,
- Fig. 5: das Positionieren des als Drehteil hergestellten Formkörperstutzens an der Stutzenöffnung im Wandungsmaterial,

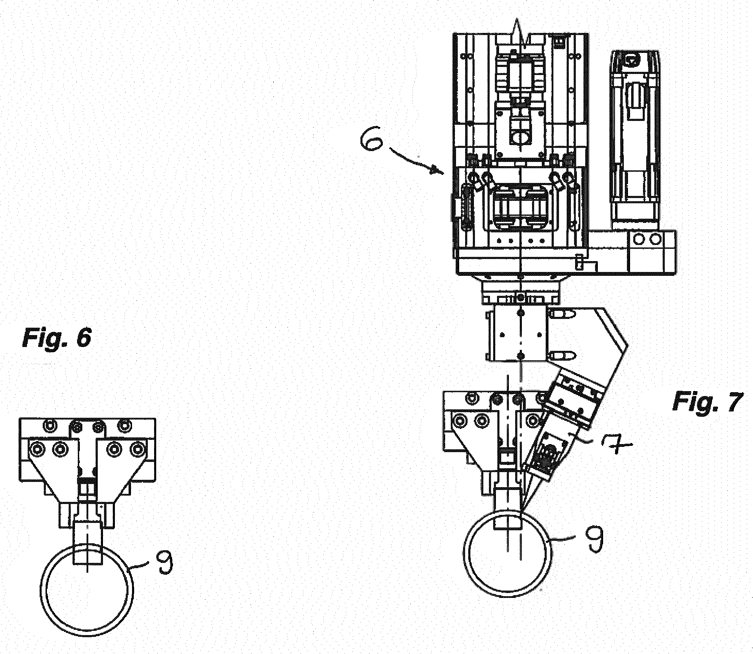

- Fig. 6: das Ansetzen und Positionieren des Formkörperstutzens an dem die Stutzenöffnung umgrenzenden Randbereich des Wandungsmaterials,
- Fig. 7: das Anheften des Formkörperstutzens an dem die Stutzenöffnung umgrenzenden Randbereich des Wandungsmaterials,

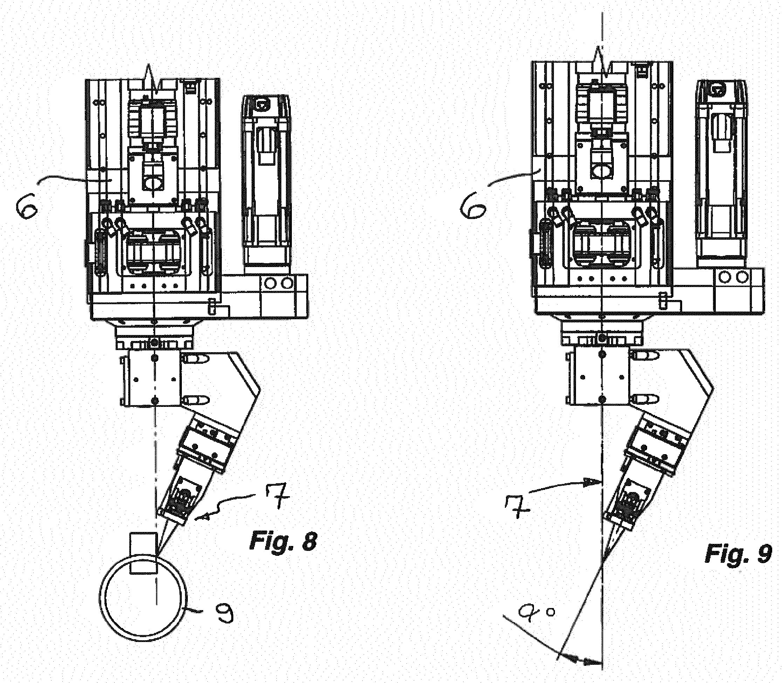

- Fig. 8: das umlaufende dichte Verschweißen des Formkörperstutzens an dem die Stutzenöffnung umgrenzenden Randbereich des Wandungsmaterials, und

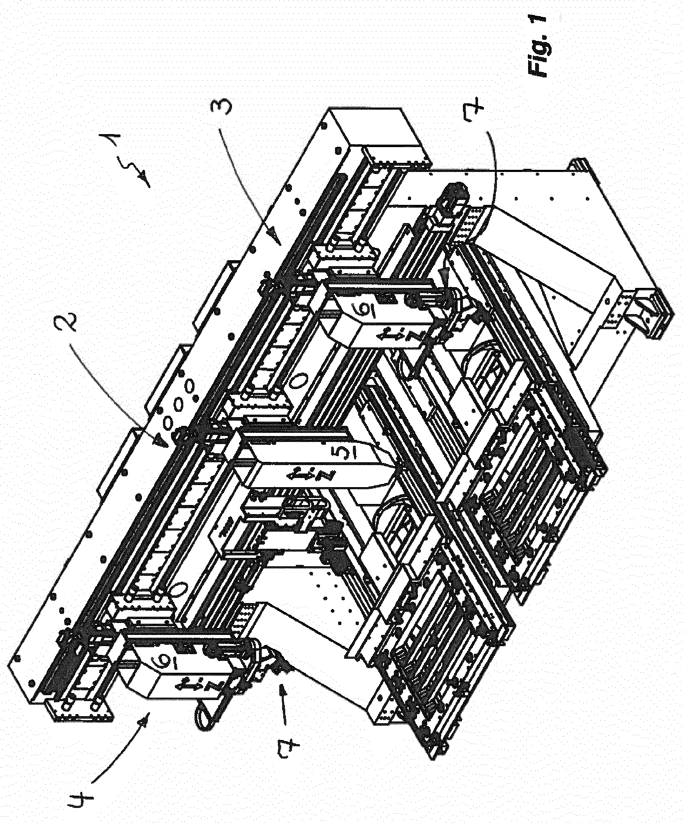

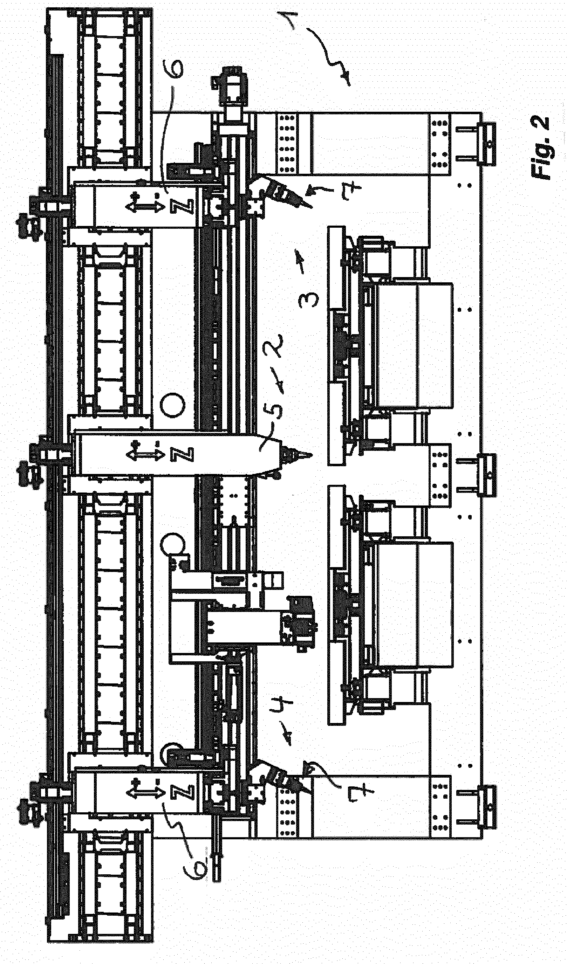

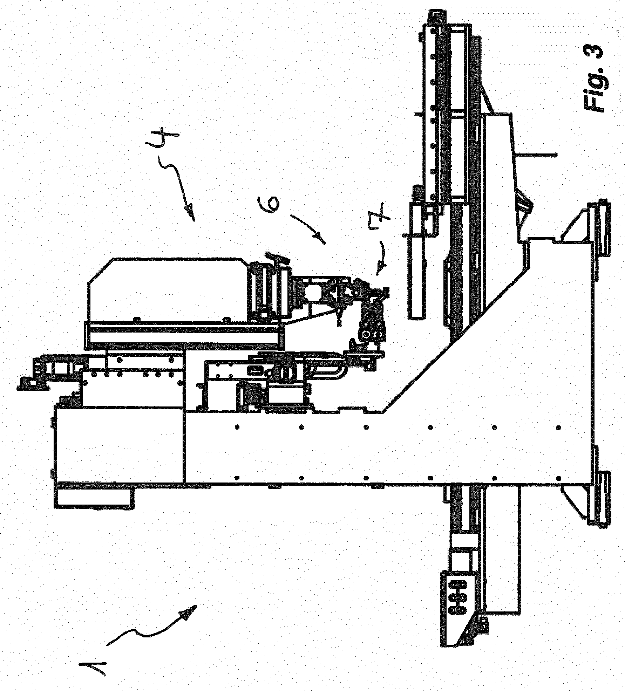

- Fig. 9: die zum Anheften und Verschweißen des Formkörperstutzens vorgesehene und in einer der Arbeitsstationen der in den Figuren 1 bis 3 gezeigten Materialbearbeitungsmaschine befindliche Laserstrahlschweißeinrichtung gemäß den Figuren 7 und 8.

In den Figuren 1 bis 3 ist eine Materialbearbeitungsmaschine dargestellt, die zur Herstellung eines Formkörpers bestimmt ist, der an einer Stutzenöffnung einen Formkörperstutzen hat. Die Materialbearbeitungsmaschine 1 hat hier drei Arbeitsstationen 2, 3 und 4, von denen jeweils in zumindest zwei Arbeitsstationen 2, 3, 4 einander nachfolgende Bearbeitungsvorgänge an ein und demselben Werkstück erfolgen. Dabei weist die Materialbearbeitungsmaschine 1 eine erste Arbeitsstation 2 mit einer Laserstrahlschneideinrichtung 5 auf, während beidseits dieser ersten Arbeitsstation 2 jeweils eine zweite Arbeitsstation 3, 4 mit einer Laserstrahlschweißeinrichtung 6 vorgesehen ist. Den Laserstrahleinrichtungen 5, 6 sind gemeinsame Aufspanneinrichtungen zugeordnet, die mitsamt dem zu bearbeitenden Werkstück in der Materialbearbeitungsmaschine 1 zwischen den Arbeitsstationen 2, 3, 4 verfahrbar sind.

Aus den Figuren 1 bis 3 ist erkennbar, dass die Laserstrahleinrichtungen 5, 6 in den Arbeitsstationen 2, 3, 4 entlang einer Z-Achse verfahrbar sind. Die in den Arbeitsstationen 3, 4 vorgesehenen Laserstrahlschweißeinrichtungen weisen jeweils eine den Laserstrahl führende Laseroptik 7 auf, die als eine um eine Drehachse verfahrbare Rotations- oder Drehoptik ausgebildet ist.

In Figur 4 ist gezeigt, wie mit Hilfe der Laserstrahlschneideinrichtung eine Stutzenöffnung 8 in ein zur Herstellung eines Formkörpers benötigten Wandungsabschnitts eingearbeitet werden kann. Hat die Laserstrahlschneideinrichtung 5 die Stutzenöffnung 8 in das Wandungsmaterial eingearbeitet, wird - wie die Figuren 5 und 6 zeigen - ein meist als Drehteil hergestellter Formkörperstutzen 9 an dem die Stutzenöffnung umgrenzenden Randbereich des Wandungsabschnitts positioniert.

In Figur 7 ist gezeigt, dass der Formkörperstutzen 9 an dem Wandungsmaterial angeheftet und in der definierten Position fixiert wird, wovor anschließend - wie in Figur 8 gezeigt ist - der Formkörperstutzen 9 rundum an dem die Stutzenöffnung 8 umgrenzenden Randbereich des Wandungsmaterials dicht festgeschweißt wird. Während der in den Figuren 4 bis 8 gezeigten Arbeitsschritte ist das zur Herstellung des Formkörpers benötigte Wandungsmaterial in einer gemeinsamen Aufspanneinrichtung gehalten, die wahlweise unterhalb der Laserstrahlschneideinrichtung 5 oder der Laserstrahlschweißeinrichtung 6 positioniert werden kann.

Um die Stutzenöffnung 8 mit hoher Genauigkeit in das in einer der Aufspanneinrichtungen befindliche Werkstück einarbeiten zu können, wird die Laserstrahlschneideinrichtung 5 in einem gleichbleibendem Abstand zur Werkstück-Oberfläche verfahren, selbst wenn diese Werkstück-Oberfläche des Werkstückes bereichsweise aus einer Aufspannebene vorsteht und/oder unter einer Aufspannebene angeordnet sein sollte. Dabei ist zur Einhaltung eines solchen gleichbleibenden Abstands zwischen der Laserstrahleinrichtung 5 und der Werkstück-Oberfläche des in einer der Aufspanneinrichtungen gehaltenen Werkstücks eine Höhenkompensation vorgesehen, die vorzugsweise eine kapazitive Abstandsmessung des Abstands zwischen der Laserstrahlschneideinrichtung 5 und der Werkstück-Oberfläche beinhaltet.

Da während des Schweißvorganges der Laserstrahlschweißeinrichtungen 6 eine solche Höhenkompensation insbesondere durch kapazitive Abstandsmessung nicht ohne weiteres möglich ist, werden während des Schneidvorganges fortlaufend die Koordinaten der Laserstrahlschneideinrichtung 5 erfasst und in einer hier nicht weiter gezeigten Steuereinheit der Materialbearbeitungsmaschine 1 gespeichert, wobei die während des Schneidvorganges gespeicherten Koordinaten anschließend zum Festlegen des Soll- und Verfahrwegs der Laserstrahlschweißeinrichtungen 6 während des Schweißvorganges dienen. Dazu werden die während des Schneidvorganges gespeicherten Koordinaten in Polarkoordinaten umgerechnet, anhand denen anschließend der Soll- und Verfahrweg der Laserstrahlschweißeinrichtungen 6 während des nachfolgenden Schweißvorganges festgelegt werden kann. Auf diese Weise kann mit hoher Genauigkeit festgelegt werden, wo die Schweißoptik der Laserstrahlschweißeinrichtungen 6 mit dem Schweißvorgang beginnen und wo sie den Schweißvorgang beenden sollen.

### Bezugszeichenliste

- 1: Materialbearbeitungsmaschine
- 2: erste Arbeitsstation
- 3: zweite Arbeitsstation
- 4: weitere zweite Arbeitsstation
- 5: Laserstrahlschneideinrichtung
- 6: Laserstrahlschweißeinrichtung
- 7: Laseroptik
- 8: Stutzenöffnung
- 9: Formkörperstutzen

## Patentansprüche

1. Materialbearbeitungsmaschine (1), die zum Laserstrahlschneiden und/oder Laserstrahlschweißen eines, in einer Aufspanneinrichtung der Materialbearbeitungsmaschine (1) gehaltenen Werkstücks wenigstens eine Laserstrahleinrichtung (5, 6) hat, **dadurch gekennzeichnet, dass** die Materialbearbeitungsmaschine (1) wenigstens eine Laserstrahlschneideinrichtung (5) und mindestens eine Laserstrahlschweißeinrichtung (6) hat, dass der wenigstens einen Laserstrahlschneideinrichtung (5) und der mindestens einen Laserstrahlschweißeinrichtung (6) wenigstens eine gemeinsame Aufspanneinrichtung zugeordnet ist, und dass die Relativposition der wenigstens einen Aufspanneinrichtung mitsamt dem daran gehaltenen Werkstück in Relation zur wenigstens einen Laserstrahlschneideinrichtung (5) und zur mindestens einen Laserstrahlschweißeinrichtung (6) in der Materialbearbeitungsmaschine (1) veränderbar ist.

2. Materialbearbeitungsmaschine nach Anspruch 1, **dadurch gekennzeichnet, dass** die wenigstens eine Laserstrahlschneideinrichtung (5) in gleichbleibendem Abstand zu einer, bereichsweise aus einer Aufspannebene vorstehenden und/oder unter einer Aufspannebene angeordneten Werkstück-Oberfläche verfahrbar ist.

3. Materialbearbeitungsmaschine nach Anspruch 2, **dadurch gekennzeichnet, dass** zur Einhaltung eines gleichbleibenden Abstands zwischen der Laserstrahleinrichtung (5) und der Werkstück-Oberfläche des in der Aufspanneinrichtung gehaltenen Werkstücks eine Höhenkompensation vorgesehen ist, und dass zur Höhenkompensation vorzugsweise eine kapazitive Abstandsmessung des Abstands zwischen der wenigstens einen Laserstrahlschneideinrichtung (5) und der Werkstück-Oberfläche vorgesehen ist.

4. Materialbearbeitungsmaschine nach einem der Ansprüche 1 bis 3, **dadurch gekennzeichnet, dass** während des Schneidvorganges fortlaufend die Koordinaten der wenigstens einen Laserstrahlschneideinrichtung (5) erfasst und in einer Steuereinheit der Materialbearbeitungsmaschine (1) gespeichert werden, und dass die während des Schneidvorganges gespeicherten Koordinaten zum Festlegen des Soll- und Verfahrwegs der mindestens einen Laserstrahlschweißeinrichtung (6) während des Schweißvorganges dienen.

5. Materialbearbeitungsmaschine nach Anspruch 4, **dadurch gekennzeichnet, dass** die während des Schneidvorganges gespeicherten Koordinaten in Polarkoordinaten umgerechnet werden, anhand denen anschließend der Soll- und Verfahrweg der mindestens einen Laserstrahlschweißeinrichtung (6) festlegbar ist.

6. Materialbearbeitungsmaschine nach einem der Ansprüche 1 bis 5, **dadurch gekennzeichnet, dass** die Aufspanneinrichtung als Vakuum- oder Magnetspanneinrichtung ausgebildet ist.

7. Materialbearbeitungsmaschine nach dem Oberbegriff von Anspruch 1, insbesondere nach einem der Ansprüche 1 bis 6, **dadurch gekennzeichnet, dass** die mindestens eine Laserstrahlschweißeinrichtung (6) eine den Laserstrahl führende Laseroptik (7) hat, die als eine um eine Drehachse verfahrbare Rotations- oder Drehoptik ausgebildet ist.

8. Materialbearbeitungsmaschine nach dem Oberbegriff von Anspruch 1, insbesondere nach einem der Ansprüche 1 bis 7, **dadurch gekennzeichnet, dass** die Materialbearbeitungsmaschine (1) zumindest drei Arbeitsstationen (2, 3, 4) hat, von denen jeweils in zumindest zwei Arbeitsstationen (2, 3, 4) einander nachfolgende Bearbeitungsvorgänge an ein und demselben Werkstück erfolgen.

9. Materialbearbeitungsmaschine nach einem der Ansprüche 1 bis 8, **dadurch gekennzeichnet, dass** die Aufspanneinrichtung mitsamt dem Werkstück in der Materialbearbeitungsmaschine (1) zwischen den Arbeitsstationen (2, 3, 4) verfahrbar ist.

10. Materialbearbeitungsmaschine nach einem der Ansprüche 1 bis 9, **dadurch gekennzeichnet, dass** die Materialbearbeitungsmaschine (1) eine erste Arbeitsstation (2) mit einer Laserstrahlschneideinrichtung (5) hat, und dass beidseits der ersten Arbeitsstation (2) jeweils eine zweite Arbeitsstation (3, 4) mit einer Laserstrahlschweißeinrichtung (6) vorgesehen ist.

11. Verfahren zur Herstellung eines Formkörpers mit wenigstens einem, in das Formkörperinnere führenden Formkörperstutzen (9) in einer Materialbearbeitungsmaschine (1), die insbesondere gemäß einem der Ansprüche 1 bis 10 ausgebildet ist, **dadurch gekennzeichnet, dass** in einen Teilbereich eines für den Formkörper bestimmten Wandungsmaterials eine Stutzenöffnung (8) durch Laserstrahlschneiden eingearbeitet wird, dass in einem nachfolgenden Verfahrensschritt der Formkörperstutzen (9) an den die Stutzenöffnung (8) umgrenzenden Randbereich des Wandungsmaterials der Formkörperstutzen (9) durch Laserstrahlschweißen befestigt wird, und dass das Wandungsmaterial während des Laserstrahlschneidens und des nachfolgenden Laserstrahlschweißens in ein und derselben Aufspanneinrichtung gehalten ist.

12. Verfahren nach Anspruch 11, **dadurch gekennzeichnet, dass** die wenigstens eine Laserstrahlschneideinrichtung (5) in gleichbleibendem Abstand zu einer, bereichsweise aus einer Aufspannebene vorstehenden und/oder unter einer Aufspannebene angeordneten Werkstück-Oberfläche verfahren wird.

13. Verfahren nach Anspruch 11 oder 12, **dadurch gekennzeichnet, dass** zur Einhaltung eines gleichbleibenden Abstands zwischen der wenigstens einen Laserstrahleinrichtung (5) und der Werkstück-Oberfläche des in der Aufspanneinrichtung gehaltenen Werkstücks eine Höhenkompensation vorgesehen ist, und dass zur Höhekompensation vorzugsweise eine kapazitive Abstandsmessung des Abstands zwischen der wenigstens einen Laserstrahlschneideinrichtung (5) und der Werkstück-Oberfläche vorgesehen ist.

14. Verfahren nach einem der Ansprüche 11 bis 13, **dadurch gekennzeichnet, dass** während des Schneidvorganges fortlaufend die Koordinaten der wenigstens einen Laserstrahlschneideinrichtung (5) erfasst und in einer Steuereinheit der Materialbearbeitungsmaschine (1) gespeichert werden, und dass die während des Schneidvorganges gespeicherten Koordinaten zum Festlegen des Soll- und Verfahrwegs der mindestens einen Laserstrahlschweißeinrichtung (6) während des Schweißvorganges dienen.

15. Verfahren nach einem der Ansprüche 11 bis 14, **dadurch gekennzeichnet, dass** die während des Schneidvorganges gespeicherten Koordinaten in Polarkoordinaten umgerechnet werden, anhand denen anschließend der Soll- und Verfahrweg der mindestens einen Laserstrahlschweißeinrichtung (6) festgelegt wird.
